Europäisches Patentamt

European Patent Office

Office européen des brevets

(19)

(11) **EP 1 189 047 A2**

(12) **EUROPÄISCHE PATENTANMELDUNG**

(43) Veröffentlichungstag:
20.03.2002 Patentblatt 2002/12

(51) Int Cl.⁷: **G01L 1/22**

(21) Anmeldenummer: 01122250.2

(22) Anmeldetag: 17.09.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.07.2001 DE 10135686**
**19.09.2000 DE 20016329 U**

(71) Anmelder: **SIEMENS AKTIENGESELLSCHAFT**
**80333 München (DE)**

(72) Erfinder:
• **Penzar, Zlatko, Dr. rer. nat.**
**60529 Frankfurt (DE)**
• **Porth, Wolfgang**
**60388 Frankfurt (DE)**
• **Irion, Jürgen**
**29378 Wittingen (DE)**
• **Rassler, Andrea**
**61449 Steinbach (DE)**

(54) **Biegemomentsensor**

(57)     Die Erfindung betrifft einen Biegemomentsensor, mit einer dehnungsempfindlichen Widerstände aufweisenden Brückenschaltung, wobei die dehnungsempfindlichen Widerstände unmittelbar auf einem Bauteil angeordnet sind, an welchem zwischenträgerfrei direkt Biegekräfte angreifen, wobei bei Biegung des Bauteiles ein der Dehnung der Dickschichtwiderstände entsprechenden elektrisches Signal an der Brückenschaltung abnehmbar ist.

Bei einem Biegemomentsensor, bei welchem bei variierender Biegelast die Erzeugung eines fehlerfreien Brückensignales gewährleistet ist, sind die dehnungsempfindlichen Widerstände (R1, R2, R3, R4) auf dem Bauteil (1) kreisähnlich angeordnet, wobei die Widerstände eines Brückenzweiges (R1, R2; R3, R4) diagonal zueinander jeweils in einer Position ($r_0$) angeordnet sind, in welcher die Widerstandsänderung jedes Widerstandes (R1, R2, R3, R4) unter Biegung gleiche Betragswerte einnimmt, und das an der Brückenschaltung abnehmbare Ausgangssignal ($U_Q$) nur von dem Biegemoment abhängig ist.

**Fig. 1**

EP 1 189 047 A2

**Beschreibung**

Die Erfindung betrifft einen Biegemomentsensor, mit einer dehnungsempfindlichen Widerstände aufweisenden Brückenschaltung, wobei die dehnungsempfindlichen Widerstände unmittelbar auf einem Bauteil angeordnet sind, an welchem zwischenträgerfrei direkt Biegekräfte angreifen, wobei bei Biegung des Bauteiles ein der Dehnung der Dickschichtwiderstände entsprechendes elektrisches Signal an der Brückenschaltung abnehmbar ist.

An sich bekannte Biegemomentsensoren weisen Brückenschaltungen auf, welche mit Hilfe von dehnungsempfindlichen Dickschichtwiderstände gebildet sind, die unmittelbar auf einem auf Biegung zu belastenden Bauteil angeordnet sind. Die Widerstände der Brückenschaltungen sind außerhalb der Erstreckungsrichtung einer für Biegebelastung neutralen Phase des Bauteiles angeordnet und weisen zu dieser einen vorgegebenen Abstand und einen vorgegebenen Winkel auf.

Beim Anliegen örtlich variierender Biegemomente treten aber bei den Widerständen unterschiedliche Widerstandsänderungen und zusätzlich Torsionseinflüsse auf, die das Meßergebnis verfälschen.

Der Erfindung liegt somit die Aufgabe zugrunde, einen Biegemomentsensor anzugeben, bei welchem bei variierender Biegelast die Erzeugung eines fehlerfreien Brückensignales gewährleistet ist.

Erfindungsgemäß wird die Aufgabe dadurch gelöst, daß die dehnungsempfindlichen Widerstände auf dem Bauteil annähernd kreisähnlich angeordnet sind, wobei die Widerstände jedes Brückenzweiges diagonal zueinander in einer Position angeordnet sind, in welcher die Widerstandsänderung unter Biegelast gleiche Betragswerte annimmt und das an der Brückenschaltung abnehmbare Ausgangssignal nur von dem Biegemoment abhängig ist.

Die Erfindung hat den Vorteil, daß die durch unterschiedliche Dehnungswerte in Bestromungsrichtung der Widerstände hervorgerufenen Signaländerungen nicht in einer Verschaltung kompensiert werden müssen, sondern allein durch die Plazierung der Widerstände korrigiert werden.

In einer Weiterbildung sind die dehnungsempfindlichen Widerstände der Brückenzweige außerhalb einer, auf der Oberfläche des Bauteiles verlaufenden Ausnehmung im Randbereich dieser Ausnehmung, diese umfassend, angeordnet.

Dies hat den Vorteil, daß das Signalverhalten des Biegemomentsensor auf einfache Weise erhöht werden kann. Aufgrund der Ausnehmung überlagern sich die am Trägerelement angreifenden mechanischen Spannungen, wobei die Dehnung in den Hauptrichtungen (longitudinal, transversal) einen ungleichen Betrag aufweisen, wodurch das abgegriffene Meßsignal an der Brückenschaltung in einfacher Weise erhöht werden kann.

Lastinduzierte Änderungen der Widerstandswerte lassen sich in besonders einfacher Weise korrigieren, wenn das Bauteil in seinem Randbereich radiale Einbuchtungen sowie die Ausnehmung radiale Bereiche aufweist, wobei je eine radiale Einbuchtung sowie ein radialer Bereich der Ausnehmung einem Widerstand zugeordnet sind, welcher auf einer Verbindungslinie des ersten Radius der Einbuchtung und eines zweiten Radius der Ausnehmung angeordnet sind. Ist die Ausnehmung kreisförmig ausgebildet, ist jeder Widerstand radial mit annähernd gleichen Winkelabständen um die Ausnehmung angeordnet. Das heißt, die Widerstände befinden sich im gleichen Abstand zur Mitte der Bohrung.

Durch die Ausnehmung wird das Signalverhalten des Sensors ohne komplexe Änderung der Wellengeometrie einfach erhöht. Ein solcher Sensor ist für die Massenproduktion geeignet, da er kosten- und zeitgünstig herstellbar ist.

Vorteilhafterweise sind die auf dem Metallbauteil angeordneten Widerstände als Dickschichtwiderstände ausgebildet, wobei die Empfindlichkeit der zur Herstellung der Widerstände verwendeten Widerstandspasten bezüglich einer Längs- und Querdehnung unterschiedlich sind. Auch dadurch wird eine Erhöhung des Signalverhaltens des Sensors erreicht.

In einer Weiterbildung der Erfindung sind die Dickschichtwiderstände zur Messung der Biegung in einer Ebene angeordnet. Es ist aber auch möglich, die Dickschichtwiderstände in einer oder mehreren Ebenen anzuordnen.

Vorteilhafterweise können auch zwei Brückenschaltungen verwendet werden, wobei die Widerstände der ersten Brückenschaltung in einer Position $r_1 < r_0$ und die Widerstände der zweiten Brückenschaltung in einer Position $r_2 > r_0$ angeordnet sind, wobei die Positionen $r_1$ und $r_2$ betragsmäßig dieselbe Differenz zur Position $r_0$ aufweisen.

Die Erfindung läßt zahlreiche Ausführungsformen zu. Eine davon soll anhand der in der Zeichnung dargestellten Figuren näher erläutert werden.

Es zeigt:

Figur 1: Draufsicht auf ein auf Biegung zu beanspruchendes erfindungsgemäßes Bauteil

Figur 2: Anordnung des dehnungsempfindlichen Widerstandes auf dem Bauteil nach Figur 1

Figur 3: mechanische Belastung des Bauteiles

Figur 4: Spannungsverlauf in der Brückenschaltung

Gleiche Merkmale sind mit gleichen Bezugszeichen gekennzeichnet.

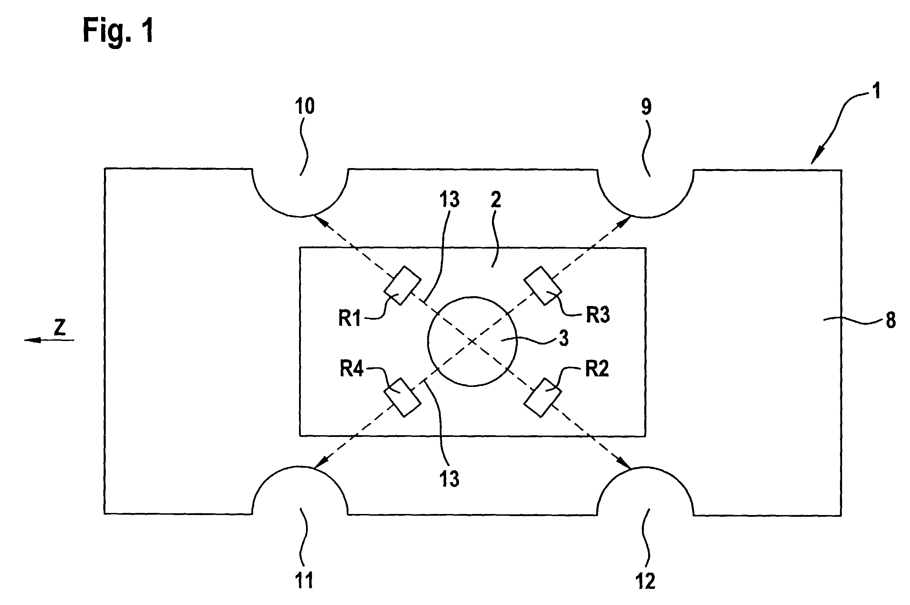

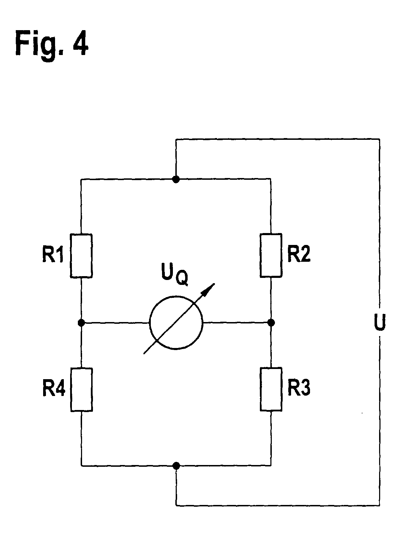

In Figur 1 ist ein Biegemomentsensor dargestellt. Auf einer auf Biegung zu beanspruchenden Welle 1, welche aus Stahl oder einer Stahllegierung besteht und quaderförmig ausgebildet ist, sind identisch aufgebaute Dickschichtwiderstände R1, R2, R3, R4 angeordnet. Die Widerstände R1, R2, R3, R4 sind Figur 4 entsprechend zu einer Brückenschaltung verknüpft.

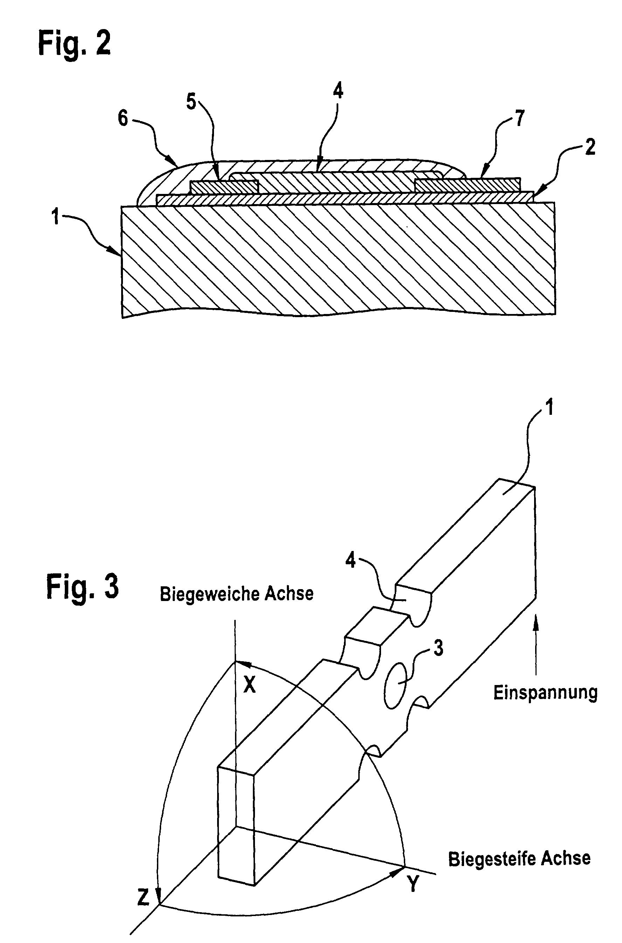

Die Widerstandsbrücke ist in ihrer gesamten Ausdehnung auf einem Dielektrikum 2 angeordnet, welches direkt ohne einen Zwischenträger auf dem Bauteil 1 aufliegt. Ein Schnitt durch einen dehnungsempfindlichen Widerstand R1 ist in Figur 2 dargestellt.

Wie aus Figur 2 hervorgeht, befinden sich auf dem Dielektrikum 2 elektrische Leiterbahnen 5, die durch eine Leiterbahnschicht gebildet sind. Zwischen diesen Leiterbahnen 5 erstreckt sich eine elektrische Widerstandsschicht 9, die den als Dehnungsmeßstreifen ausgebildeten Widerstand R1, R2, R3 oder R4 bildet. Den Abschluß bildet eine Passivierungsschicht 6, die nur den als Kontaktfläche 7 dienenden Teil mindestens einer Leiterbahn 5 unbedeckt läßt und zur elektrischen Kontaktierung des Widerstandes R1 dient.

Der beschriebene Dehnungsmeßstreifen wird in Dickschichttechnologie unmittelbar auf dem Träger 1 hergestellt.

Um eine innige Verbindung des Dielektrikums 2 mit dem Bauteil 1 herzustellen, wird das Dielektrikum 2 in Drucktechnik mittels einer nicht leitenden Paste auf der Welle 1 aufgetragen. Die Paste enthält dabei eine Glasfritte, die bei geringerer Temperatur schmelzbar ist als das Material der Welle 1. Nach Aufbringen der Paste wird ebenfalls in Siebdrucktechnik eine leitende Schicht aufgebracht, die die Leiterbahn 5 und die Kontaktfläche 7 bildet, auf welcher wiederum die die Widerstände R1, R2, R3. R4 bildende, strukturierte Widerstandsschicht 4 angeordnet ist. Die so vorbereitete Welle 1 wird in einem Hochtemperaturprozess bei einer Temperatur von etwa 750 bis 900 °C wärmebehandelt. Dabei versintert die Glasschicht mit der Oberfläche des Stahls der Welle 1. Bei diesem Aufsintern werden zwischen dem Dielektrikum 2 und der Welle 1 Oxidbrücken gebildet, die eine unlösbare Verbindung zwischen Welle 1 und Dielektrikum 2 gewährleisten, wodurch eine stark innige Verbindung zwischen beiden erreicht wird.

Wie aus Figur 1 ersichtlich weist die Welle 1 eine rechteckige Oberfläche 8 auf, wobei mittig eine kreisförmige Öffnung 3 ausgebildet ist, welche die Welle 1 vollständig durchsetzt.

Der Rand des Bauteiles 1 weist in seiner Längserstreckung beidseitig jeweils zwei halbkreisförmige Randausnehmungen 9, 10 bzw. 11, 12 auf, wobei die Ausnehmungen 10 und 11 sowie 9 und 12 gegenüberliegend angeordnet sind. Die Radien der Randausnehmungen 9, 10, 11, 12 entsprechen annähernd dem Radius der Öffnung 3.
Die Dehnungsmeßstreifen R1, R2, R3, R4 sind auf jeweils einer vom Mittelpunkt der Öffnung 3 ausgehenden Linie 13 angeordnet, wobei die Linie 13 die gedachte Verbindung zwischen dem Radius einer Randausnehmung 9, 10, 11, 12 und den Radius der Öffnung 3 darstellt.
Aufgrund der Öffnung 3 und der Randausnehmungen 9, 10, 11, 12 treten auf der Oberfläche der Welle 1 bei Beanspruchung auf Biegung entlang einer gedachten Mittellinie Z zwei Hauptdehnungen mit unterschiedlichem Betrag auf, welche aus Sicht des jeweiligen Dickschichtwiderstandes R1 bis R4 einer longitudinalen Dehnung und einer transversalen Dehnung entsprechen.

Wie Figur 3 zu entnehmen ist, betrachtet man dabei die Welle 1 als Biegebalken, welche auf einer Seite fest eingespannt ist. Ausgehend davon, bildet dabei die in Figur 3 dargestellte X-Achse eine biegeweiche Achse, während die in Y-Richtung weisende Achse eine biegesteife Achse ist. Die Wellenachse Z entspricht dabei gleichzeitig der hinsichtlich der Biegebelastung neutralen Phase der Welle 1.
Gemäß Figur 1 sind die einen Brückenzweig bildenden Widerstände R1 und R2 bzw. R3 und R4 beidseitig zur neutralen Phase angeordnet. Da alle Widerstände R1 bis R4 mit demselben radialen Abstand um die Ausnehmung 3 positioniert sind, weisen sie betragsmäßig alle denselben Abstand zur neutralen Phase auf, unterscheiden sich aber in ihrer Winkelstellung zur neutralen Phase.

Die Widerstände R1, R2, R3, R4 sind dabei gemäß Figur 4 elektrisch zu einer Brückenschaltung verschaltet.

Die Widerstände verhalten sich bei örtlich variierender Biegebelastung unterschiedlich, wobei es eine Position zum Mittelpunkt der Öffnung 3 gibt, bei welchem die Widerstandsänderung in allen Widerständen R1, R2, R3, R4 gleich ist. Dies gilt für jede beliebige Biegelast um die biegesteife Achse.

Bei einer allgemeinen Biegebelastung (Moment und Momentengradient) um die biegesteife Achse (Y-Achse) ergibt sich, dass bei der Entfernung $r_0$ der Widerstände R1 und R3 zur Mitte der Öffnung 3 die Widerstandsänderungen $\Delta R_1$ und $\Delta R_3$ gleiche Werte erreichen.

Für die Widerstandsänderungen $\Delta R2$ und $\Delta R4$ gilt:

$$\Delta R_2 = -\Delta R_3 \text{ und } \Delta R_4 = -\Delta R_1 \qquad (1)$$

Bei einer Verschaltung gemäß Figur 4 ergibt sich ein Brückensignal

$$U_Q = U \cdot \frac{1}{4R}(\Delta R_1 + \Delta R_3 - \Delta R_2 - \Delta R_4) \qquad (2)$$

Für die Position $r_0$ erhält man

$$\Delta R_1 = \Delta R_3 \qquad (3)$$

Unter Berücksichtigung der Figur 1 ergibt sich damit

$$\Delta R_2 = \Delta R_4 \qquad (4)$$

wobei aus der Formel 2 sich ein Brückensignal von

$$U_Q = U \cdot A_S \cdot M_Y \cdot (z_C)$$

ergibt.

Dabei ist $A_S$ ein konstanter Faktor, der von den genauen Sensorabmaßen, dem Sensormaterial sowie den Widerstandseigenschaften abhängt.

$M_Y (z_c)$ ist der Wert des Biegemomentes um die biegesteife Achse (Y-Achse in Bild1).

Diese Schaltung ist zugleich unempfindlich gegen Torsion, da aus Symmetriegründen unter Torsion gilt

$$\Delta R_1 = \Delta R_2$$

und

$$\Delta R_3 = \Delta R_4$$

wodurch sich in Formel (2) das Brückensignal $U_Q = 0$ ergibt.

Auf Grund dieser Anordnung und Signalauswertung ist in der Position $r = r_0$ dieser Sensor torsions- und querkraftkompensiert für Biegemomente um die biegesteife Achse. Darüber hinaus ist der Sensor unempfindlich auf Biegung um die biegeweiche Achse.

Ein ähnliches Bild ergibt sich bei einer beliebigen örtlich variierenden Biegebelastung um die biegeweiche Achse (X-Achse). Dabei gilt:

$$\Delta R_1 = \Delta R_4$$

und

$$\Delta R_2 = \Delta R_3$$

für jede radiale Position r. Somit erhält man auch hier für das Brückensignal ein $U_Q = 0$

Auf einen solchen Sensor können mehrere derartige Brückenschaltungen beliebig aneinander gereiht sein. Biegemessungen können dabei auch erfolgen, wenn die Brückenwiderstände in einer oder in mehreren Ebenen angeordnet sind. Sie führen zum gleichen torsionskompensierten Ergebnis.

Eine zuverlässige Messung kann auch erreicht werden, wenn zwei Brükkenschaltungen vorhanden sind, wobei die Widerstände der einen Brücke in Positionen $r>r_0$ und die Widerstände der anderen Brücke in Positionen $r<r_0$ angeordnet sind, wodurch die torsions- und querkraftbedingtenbedingten Fehler jeweils unterschiedliche Vorzeichen aufweisen und die Beträge der Fehler gleich groß sind.

**Patentansprüche**

1. Biegemomentsensor, bestehend aus einer dehnungsempfindliche Widerstände aufweisenden Brückenschaltung, wobei die dehnungsempfindlichen Widerstände unmittelbar auf einem metallischen Bauteil angeordnet sind, an welchem zwischenträgerfrei direkt Biegekräfte angreifen, wobei bei Boegung des Bauteils ein der Dehnung der Dickschichtwiderstände entsprechendes elektrisches Signal an der Brükkenschaltung abnehmbar ist, **dadurch gekennzeichnet, daß** die dehnungsempfindlichen Widerstände (R1, R2, R3, R4) auf dem Bauteil (1) kreisähnlich angeordnet sind, wobei die Widerstände eines Brückenzweiges (R1, R2; R3, R4)) diagonal zueinander jeweils in einer Position ($r_0$) angeordnet sind, in welcher die Widerstandsänderung jedes Widerstandes (R1, R2, R3, R4) unter Biegung gleiche Betragswerte einnimmt, und das an der Brückenschaltung abnehmbare Ausgangssignal ($U_Q$) nur von der Biegemoment abhängig ist.

2. Biegemomentsensor nach Anspruch 1, **dadurch gekennzeichnet, daß** die dehnungsempfindlichen Widerstände (R1, R2, R3, R4) der Brückenzweige außerhalb einer, auf der Oberfläche (8) des Bauteiles (1) verlaufenden Ausnehmung (3), diese umfassend, angeordnet sind.

3. Biegemomentsensor nach Anspruch 2, **dadurch gekennzeichnet, daß** das Bauteil (1) in seinem Randbereich radiale Einbuchtungen (9, 10, 11, 12) sowie die Ausnehmung (3) radiale Bereiche aufweist, wobei je eine radiale Einbuchung (9, 10, 11, 12) sowie ein radialer Bereich der Ausnehmung (3) einem Widerstand (R1, R2, R3, R4) zugeordnet ist, welcher auf einer Verbindunglinie (13) des ersten Radius der Einbuchtung (9, 10, 11, 12) und eines zweiten Radius der Ausnehmung (3) angeordnet ist.

4. Biegemomentsensor nach Anspruch 3, **dadurch gekennzeichnet, daß** die Ausnehmung (3) kreisförmig ausgebildet ist, wobei jeder Widerstand (R1, R2, R3, R4) radial mit annähernd gleichen Winkelabständen um die Ausnehmung (3) und in seiner Längserstreckung senkrecht zu der Verbindungslinie (13) angeordnet ist.

5. Biegemomentsensor nach einem der vorhergehenden Ansprüche, **dadurch gekennzeichnet, daß** die Widerstände (R1, R2, R3, R4) auf der planen Oberfläche (8) des aus Metall bestehenden und einen rechteckförmigen Querschnitt aufweisenden Bauteils (1) angeordnet sind.

6. Biegemomentsensor nach Anspruch 5, **dadurch**

**gekennzeichnet, daß** die Widerstände (R1, R2, R3, R4) als Dickschichtwiderstände ausgebildet sind, wobei die Empfindlichkeit der zur Herstellung der Widerstände verwendeten Widerstandspaste bezüglich einer Längs- und Querdehnung unterschiedlich ist.

7. Biegemomentsensor nach Anspruch 5 oder 6 **dadurch gekennzeichnet, dass** zur Messung der Biegung die Dickschichtwiderstände (R1, R2, R3, R4) in einer Ebene angeordnet sind.

8. Biegemomentsensor nach Anspruch 5 oder 6 **dadurch gekennzeichnet, dass** zu Messung der Biegung die Dickschichtwiderstände (R1, R2, R3, R4) in zwei oder mehreren Ebenen angeordnet sind.

9. Biegemomentsensor nach Anspruch 1 **dadurch gekennzeichnet, dass** zwei Brückenschaltungen vorhanden sind, wobei die Widerstände der ersten Brückenschaltung in einer Position $r_1 < r_0$ und die Widerstände der zweiten Brückenschaltung in einer Position $r_2 > r_0$ angeordnet sind, wobei die Positionen $r_1$ und $r_2$ betragsmäßig dieselbe Differenz zur Position $r_0$ aufweisen.

Fig. 1

## Fig. 2

## Fig. 3

Biegeweiche Achse

X

Z

Y

Biegesteife Achse

Einspannung

## Fig. 4